# DEMANDE DE BREVET EUROPEEN

(11) **EP 2 965 618 A1**
(43) Date de publication de la demande: **13.01.2016**
(21) Numéro de dépôt: 15175261.5
(22) Date de dépôt: 03.07.2015
(51) Int. Cl.: A01G 13/04, A01G 13/06

(54) **VOILE D'HIVERNAGE CHAUFFANT AUTONOME**

(30) Priorité: 09.07.2014 FR 1456611
(71) Demandeur: Solinnovv, 69270 Fontaines Saint Martin (FR)
(72) Inventeur: Martinat, Mathieu, 69270 Fontaines Saint Martin (FR)
(74) Mandataire: Cabinet Laurent & Charras

(57) **Abrégé**

Le voile d'hivernage (1) chauffant autonome comprend un support textile (2) souple et isolant thermique qui laisse passer la lumière, lequel intègre des moyens de chauffage (3) de nature ohmique alimentés en électricité par une batterie (5). Cette batterie (5) est rechargée par des moyens photovoltaïques (6) pendant les périodes de rayonnement lumineux commandée par des moyens de régulation (7) prévus pour commander l'alimentation électrique (4) de sorte que les moyens de chauffage (3) soient alimentés en courant électrique uniquement lors de conditions de température et/ou de durée de chauffage prédéterminées. Les moyens photovoltaïques (6) peuvent être des cellules photovoltaïques sur couches minces, des cellules photovoltaïques organiques encapsulées, des fils ayant des propriétés photovoltaïques ou toute combinaison de ceux-ci.

## Description

### Domaine technique

La présente invention se rapporte à un voile d'hivernage permettant de protéger des plantes du froid et de la grêle pendant les périodes hivernales.

L'invention concerne plus particulièrement un voile d'hivernage chauffant lequel intègre un chauffage prévu pour réchauffer les plantes les plus fragiles.

### Etat de la technique

En période hivernale, il est connu de protéger les plantes en les entourant d'un voile d'hivernage. Il s'agit habituellement d'un textile non tissé très léger fabriqué en polypropylène.

Ce voile d'hivernage a pour but de protéger les plantes du froid, du vent et de l'excès d'humidité tout en assurant une aération suffisante et en laissant passer la lumière. Déployé autour d'une plante, le voile d'hivernage forme des couches d'air isolantes qui jouent un rôle d'isolant thermique. Perméable à l'eau et généralement partiellement perméable à l'air, il évite la déshydratation des végétaux protégés. Laissant passer la lumière, le voile d'hivernage produit un effet de serre qui le fait préconiser en protection hivernale. Un voile d'hivernage est également très résistant aux intempéries, notamment contre la grêle, et permet de protéger efficacement les semis et plantes contre les oiseaux et les insectes.

En revanche, lors des grands froids le voile d'hivernage n'assure pas une protection suffisante pour les plantes non rustiques, telles que les agrumes, les lauriers roses, les oliviers, les palmiers en pot, les plantes tropicales, les cactus, etc. Ces plantes fragiles doivent être hivernées, c'est à dire mises hors gel en les plaçant à proximité d'une maison chauffée, dans un garage, dans une serre, etc.

Par le document US 2005/0076561 on connaît un voile d'hivernage comprenant un élément chauffant linéaire réparti sur la surface du textile. Cet élément chauffant, de préférence sous la forme d'un cordon chauffant, est de faible puissance et alimenté en le raccordant à une batterie ou au secteur.

Un tel voile d'hivernage chauffant est théoriquement très avantageux en ce qu'il permet à une plante fragile de survivre à l'extérieur même en cas de très basses températures. Dans la pratique, il présente de nombreux défauts.

Tout d'abord, ce voile d'hivernage chauffant fonctionne en permanence lorsqu'il est alimenté en électricité, qu'il fasse froid ou non. Ainsi son utilisation prolongée est susceptible de provoquer un chauffage excessif de la plante pendant les périodes les moins froides, notamment en journée. Un tel chauffage excessif risque d'entraîner un dessèchement de la plante et/ou de la fragiliser.

Fonctionnant en permanence, ce voile d'hivernage gaspille inutilement de l'électricité pendant les périodes les moins froides et, en conséquence, décharge rapidement la batterie sur laquelle il est susceptible d'être raccordé.

Dans le cas où le voile d'hivernage chauffant décrit dans le document US 2005/0076561 est raccordé à une batterie, celle-ci présente par conséquent une durée de vie de faible durée et elle doit être changée régulièrement. Susceptible de s'être vidée en journée, il peut arriver que la batterie ne soit plus assez puissante pendant la période froide suivante, notamment la nuit, pour procurer une énergie suffisante au réchauffement de la plante. La nécessite de recharger ou de changer la batterie régulièrement implique également un coût financier et des interventions humaines régulières.

Dans le cas où le voile d'hivernage chauffant est raccordé au secteur, cela implique la présence d'un câble électrique parcourant le jardin depuis la plante jusqu'à la prise électrique la plus proche. La présence de tels câbles électriques dans le jardin impliquent un danger d'électrocution, avec risque accru en cas de neige lorsque les câbles ne sont plus visibles. Dans le cas où plusieurs plantes sont recouvertes par un voile d'hivernage chauffant le nombre de ces câbles électriques se traduit par un coût important qui est accru par l'utilisation de matériel électrique spécifique adapté à une utilisation en extérieur. En outre, un grand nombre de câbles électriques dans un jardin est très inesthétique et peut occasionner la chute d'une personne si celle-ci se prend les pieds dans un de ces câbles.

### Résumé de l'invention

L'objet de la présente invention vise par conséquent à pallier les inconvénients de l'art antérieur en proposant un nouveau voile d'hivernage chauffant.

Afin de ne pas chauffer en permanence, le voile d'hivernage chauffant de l'invention comprend des moyens permettant de le faire fonctionner uniquement pendant les périodes où cela est nécessaire.

Il comprend également des moyens d'alimentation électrique autonome en énergie en ce qu'ils comprennent des moyens embarqués de stockage d'énergie et des moyens embarqués de régénération en énergie.

Les objets assignés à l'invention sont atteints à l'aide d'un voile d'hivernage chauffant prévu pour envelopper une plante lors des périodes froides et comprenant :
- un support textile souple et isolant thermique qui laisse passer la lumière;
- des moyens de chauffage de nature ohmique fixé au support textile ;
   et caractérisé en ce qu'il comprend en outre :
   - une alimentation électrique autonome prévue pour alimenter les moyens de chauffage en courant électrique et comprenant une batterie et des moyens photovoltaïques prévus pour recharger la batterie à partir du rayonnement lumineux ;
   - des moyens de régulation prévus pour commander l'alimentation électrique de sorte que les moyens de chauffage soient alimentés en électricité uniquement lors de conditions de température et/ou de durée de chauffage prédéterminées.

Selon un exemple de mise en oeuvre, le support textile est partiellement perméable à l'air et au moins partiellement perméable à l'eau.

Selon un autre exemple de mise en oeuvre, le support textile comprend deux couches textiles emprisonnant les moyens de chauffage, l'alimentation électrique et les moyens de régulation.

Selon un exemple supplémentaire de mise en oeuvre, les moyens de chauffage de nature ohmique comprennent au moins l'un des moyens de chauffage suivants :
- un cordon chauffant rapporté sur le support textile du côté de la plante ;
- un cordon chauffant intégré dans l'épaisseur du support textile ;
- un fil résistif chauffant rapporté sur le support textile du côté destiné à venir en regard de la plante ;
- un fil résistif chauffant intégré dans la trame du support textile.

Selon un exemple de réalisation, les moyens photovoltaïques sont intégrés dans l'épaisseur du support textile ou sont rapportés sur celui-ci.

Selon un autre exemple de réalisation, les moyens photovoltaïques comprennent au moins l'un des moyens photovoltaïques suivants :
- des cellules photovoltaïques sur couche mince ;
- des cellules photovoltaïques organiques encapsulées dont le support laisse passer la lumière ;
- des fils ayant des propriétés photovoltaïques, rapportés sur le support textile ou intégrés dans la trame de celui-ci.

Selon une variante de mise en oeuvre, les moyens photovoltaïques sont majoritairement situés sur le support textile de manière à se retrouver, en utilisation, du côté extérieur orienté vers le rayonnement lumineux, tandis que les moyens de chauffage sont majoritairement situés sur le support textile de manière à se retrouver, en utilisation, du côté destiné à venir en regard de la plante.

Selon un exemple de mise en oeuvre, les moyens de régulation comprennent un thermostat qui actionne l'alimentation électrique des moyens de chauffage lorsque la température ambiante au niveau de la plante est inférieure à une valeur définie.

Selon un autre exemple de mise en oeuvre, les moyens de régulation comprennent une minuterie qui actionne l'alimentation électrique des moyens de chauffage pendant une période définie.

Selon un exemple de mise en oeuvre supplémentaire, les moyens de régulation comprennent un moyen de réglage de leurs paramètres de déclenchement.

Enfin, selon une variante de mise en oeuvre, le voile d'hivernage comporte en outre des structures mécaniques prévues de manière à faciliter sa mise en oeuvre.

Les avantages de la présente invention sont particulièrement nombreux.

Tous les moyens de l'invention peuvent être intégrés au textile, tout en lui conservant sa souplesse, ce qui permet d'utiliser avantageusement le voile d'hivernage de l'invention de manière classique et esthétique.

Autonome en énergie, le voile d'hivernage de l'invention peut être utilisé n'importe où, même là où aucune source d'électricité est disponible et son utilisation ne nécessite pas l'usage de câbles électriques.

Fonctionnant de manière automatisée et autonome, le voile d'hivernage de l'invention est pratique à utiliser et ne nécessite ni surveillance, ni maintenance, ni aucune autre sorte d'intervention pendant son utilisation.

Par ses moyens de régulation, le voile d'hivernage de l'invention prend soin de la plante qu'il entoure de manière optimale. Ces moyens pouvant être réglables, le voile d'hivernage de l'invention peut avantageusement être adapté aux besoins spécifiques de la plante qu'il protège.

### Brève description des dessins

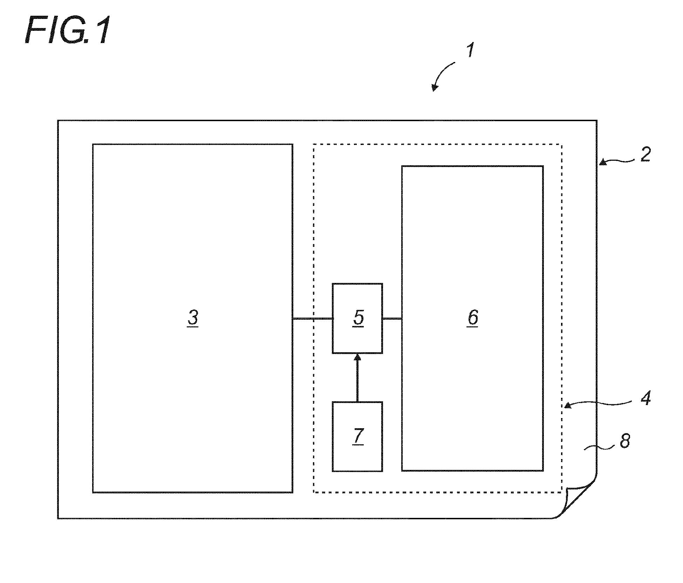

D'autres caractéristiques et avantages de la présente invention apparaîtront plus clairement à la lecture de la description qui va suivre, faite en référence aux dessins annexés, donnés à titre d'exemples non limitatifs, dans lesquels la figure 1 est une vue schématique de l'invention.

### Mode(s) de réalisation de l'invention

Le voile d'hivernage (1) chauffant de l'invention comprend un support textile (2), des moyens de chauffage (3), une alimentation électrique (4) autonome et des moyens de régulation (7).

Le support textile (2) est souple de manière à pouvoir être déployé autour de la plante qu'il doit protéger, et peut se faire sur un ou plusieurs tours. Ce textile peut ainsi être configuré sous une forme rectangulaire. En variante, le textile peut avoir été préalablement confectionné pour former un volume définissant une housse venant s'installer par le dessus de la plante, ou autour de la plante avec des moyens de fermeture rapide.

Le support textile (2) présente des propriétés isolantes sur le plan thermique afin de protéger la plante du froid extérieur, tout en laissant passer la lumière afin de ne pas entraver l'activité photosynthétique de la plante. Ainsi, enrouler le support textile (2) de plusieurs tours autour de la plante permet de créer des poches d'air isolantes.

En outre, le support textile (2) est préférentiellement partiellement perméable à l'air afin de laisser respirer la plante tout en évitant que le vent froid ne traverse le support textile (2). Cette perméabilité partielle à l'air permet également au voile d'hivernage (1) de maintenir la plante au chaud par effet de serre.

Le support textile (2) est préférentiellement au moins partiellement perméable à l'eau afin d'éviter un éventuel excès d'humidité au niveau de la plante à l'intérieur du voile d'hivernage (1).

Le support textile (2) peut comprend une ou plusieurs couches textiles (8).

Selon un mode de réalisation de l'invention, le support textile (2) comprend deux couches textiles (8) emprisonnant les moyens de chauffage (3), l'alimentation électrique (4) et les moyens de régulation (7). Ces couches textiles (8) peuvent être différentes, notamment afin de répondre aux exigences de perméabilité à l'air, à l'eau et à la lumière évoquées précédemment.

Selon un autre mode de réalisation de l'invention, les moyens cités précédemment peuvent au contraire être fixés sur le support textile (2), d'un côté ou de l'autre de celui-ci, ou sur une face ou l'autre de celui-ci, selon qu'il s'agisse de moyens prévue pour être en regard de la plante ou orienté vers le rayonnement lumineux.

Selon encore un autre mode de réalisation, le voile peut être tissé directement avec des fils ou fibres présentant des propriétés photovoltaïques, directement ou non résistantes et donc chauffantes.

Les moyens de chauffage (3) sont de nature ohmique et fixés au support textile (2). Leur position sur le support textile (2) est prévue de sorte que lorsque le voile d'hivernage (1) est enroulé autour d'une plante, les moyens de chauffage (3) se retrouvent du côté destiné à venir en regard de la plante.

A titre d'exemple, les moyens de chauffage (3) peuvent comprendre un cordon chauffant, un fil résistif chauffant, une combinaison de ceux-ci ou une fibre photovoltaïque résistante.

Chaque moyen de chauffage (3) peut par exemple être intégré dans l'épaisseur du support textile (2) ou être rapporté sur le support textile (2) du côté destiné à venir en regard de la plante.

Les moyens de chauffage (3), notamment lorsqu'ils sont sous la forme d'un fil résistif chauffant, peuvent être intégrés dans la trame du support textile (2). Dans ce cas, les moyens de chauffage (3) sont tissés, tricotés ou aiguilletés avec les fils de fond du support textile (2).

Dans le cas où le voile d'hivernage (1) est fabriqué directement avec des fibres et/ou des fils photovoltaïques résistantes, ces fibres peuvent être tissées, tricotées ou aiguilletées.

Afin de fournir une chaleur suffisante pour une plante pendant les périodes les plus froides, les moyens de chauffage (3) de nature ohmique présentent une puissance électrique supérieure à quelques dizaines de Watts. Cette puissance peut bien évidemment être adaptée par l'homme du métier en fonction du climat de la région où le voile d'hivernage (1) est utilisé et en fonction du type de plante qu'il doit protéger. En effet, le voile d'hivernage (1) ne nécessite pas la même puissance de chauffage selon qu'il est destiné à protéger du mimosa au Canada ou des géraniums en région parisienne.

L'alimentation électrique (4) de l'invention est prévue pour alimenter les moyens de chauffage (3) en électricité. Il s'agit d'une alimentation électrique (4) autonome, c'est-à-dire qu'elle n'est pas raccordée au réseau de distribution électrique et qu'elle ne comprend pas de piles ou de batteries qui doivent être changées périodiquement lorsqu'elles sont déchargées.

Dans ce but, l'alimentation électrique (4) de l'invention comprend une batterie (5) et des moyens photovoltaïques (6) prévus pour recharger la batterie (5) pendant toutes périodes de rayonnement lumineux.

De nombreux types de moyens photovoltaïques (6) peuvent être utilisés pour l'invention. On choisira préférentiellement des moyens photovoltaïques (6) qui n'empêchent pas le passage de la lumière.

Parmi les moyens photovoltaïques (6) pouvant être utilisés pour l'invention on peut par exemple citer les cellules photovoltaïques sur couche mince, les cellules photovoltaïques organiques encapsulées, les fils ayant des propriétés photovoltaïques et toute combinaison de ceux-ci.

Les moyens photovoltaïques (6) peuvent présenter une surface opaque ne laissant pas passer la lumière. Dans ce cas, les moyens photovoltaïques (6) sont répartis de façon discrète sur le voile d'hivernage (1) de manière à ne pas entraver l'activité photosynthétique de la plante.

Si les moyens photovoltaïques (6) laissent passer la lumière, il est possible de les répartir sur la totalité de la surface du voile d'hivernage (1), ce qui permet d'obtenir une grande puissance électrique pour la recharge de la batterie (5).

Ainsi, le choix des moyens photovoltaïques (6) utilisés dépend notamment de leur puissance électrique et de leur opacité, en recherchant un équilibre optimal entre puissance électrique de recharge pour la batterie (5) et surface transparente pour laisser passer la lumière.

Bien entendu, ce choix des moyens photovoltaïques (6) envisagés dépend également d'autres critères tels que leur rendement, leur coût, leur durabilité, leur impact sur l'environnement, leur esthétique, leur souplesse d'emploi, etc.

Les cellules photovoltaïques organiques sont intéressantes en ce que leur support laisse passer la lumière.

Les cellules photovoltaïques couches minces étant fines et flexibles elles sont particulièrement adaptées à être fixées sur un textile prévu pour envelopper une plante. Elles peuvent également être produites facilement à un coût avantageux.

Les moyens photovoltaïques (6) étant prévus pour être utilisés en milieux extérieur, ils doivent être protégés de l'air et de l'humidité afin de ne pas se dégrader notamment par oxydation lors de leur utilisation en milieu extérieur soumis aux intempéries, et c'est pour cette raison que les cellules photovoltaïques organiques doivent notamment être encapsulées.

Les fils ayant des propriétés photovoltaïques sont particulièrement avantageux en ce qu'ils peuvent éventuellement être tissés, tricotés ou aiguilletés avec les fils de fond du support textile (2).

Dans le cas où l'on combine des fils ayant des propriétés photovoltaïques et des fils ayant des propriétés résistives, la trame des couches textiles (8) constitutives du support textile (2) peut ainsi comporter des fils à la fois chauffants et générateurs de courant électrique.

De manière générale, les moyens photovoltaïques (6) peuvent être rapportés sur le support textile (2), intégrés dans l'épaisseur du support textile (2) ou intégrés dans la trame de celui-ci.

Leur position sur le support textile (2) est prévue de sorte que lorsque le voile d'hivernage (1) est déployé autour d'une plante, les moyens photovoltaïques (6) se retrouvent du côté extérieur, destiné à se trouver en regard du rayonnement lumineux.

Le nombre et la surface occupée par les moyens photovoltaïques (6) dépend majoritairement de l'éclairage en journée de la région où le voile d'hivernage (1) doit être utilisé et de la puissance des moyens de chauffage (3) utilisés.

Dans le cas préférés où les moyens de chauffage (3) de nature ohmique présentent une puissance électrique supérieure à quelques dizaines de Watts, le nombre et la surface occupée par les moyens photovoltaïques (6) est prévue de sorte qu'ils fournissent une puissance d'accumulation électrique permettant d'alimenter les moyens photovoltaïques (6) pendant une durée minimale de 10 heures, et de préférence pendant une durée de 15 heures, ce qui correspond à une durée déjà importante pour une longue nuit d'hiver.

La batterie (5) de l'invention comprend au moins un dispositif accumulateur d'énergie électrique, par exemple de haute capacité. Elle est prévue pour alimenter les moyens de chauffage (3) en courant électrique et pour être rechargée par les moyens photovoltaïques (6). La batterie peut aussi être par exemple un condensateur à très faible perte diélectrique, ou une batterie tissable sous forme de fibres.

De préférence, la capacité d'accumulation de la batterie (5) doit être suffisante pour pouvoir alimenter les moyens de chauffage (3) pendant une durée minimale de 15 heures.

Une capacité d'accumulation très supérieure permet d'accumuler une grande quantité d'énergie électrique pendant les moments les plus ensoleillés et/ou le plus chauds de la période d'hivernage où le voile d'hivernage (1) est utilisé afin d'avoir une quantité d'énergie électrique stockée suffisante pour les moments les moins ensoleillés et/ou le moins chauds de la période d'hivernage. Un tel mode de réalisation permet avantageusement de réduire la puissance nécessaire des moyens photovoltaïques (6), ce qui permet de réduire leur nombre et/ou leur coût par l'emploi de moyens photovoltaïques (6) moins onéreux et moins efficaces, et de laisser plus de surface libre sur le voile d'hivernage (1) pour laisser passer la lumière destinée à la plante.

La batterie (5) peut être située n'importe où sur le support textile (2). Elle peut ainsi être située en partie basse du voile d'hivernage (1), lequel ne reçoit que peu de lumière de la part du soleil. Egalement, dans le cas d'une utilisation combinée avec un pot antigel, la batterie peut être située à l'intérieur de ce pot.

Les moyens de régulation (7) sont prévus pour commander l'alimentation électrique (4) de sorte que les moyens de chauffage (3) soient alimentés en courant électrique uniquement lors de conditions de température et/ou de durée de chauffage prédéterminées.

Afin d'éviter de chauffer inutilement la plante lorsque cela n'est pas nécessaire, ce qui déchargerait inutilement la batterie (5), les moyens de régulation (7) commandent par exemple l'alimentation électrique (4) pour qu'elle alimente les moyens de chauffage (3) en électricité seulement pendant la nuit et/ou lorsque la température au niveau de la plante devient trop basse pour le confort de celle-ci.

Ainsi, les moyens de régulation (7) peuvent comprendre un thermostat qui actionne l'alimentation électrique (4) des moyens de chauffage (3) lorsque la température ambiante au niveau de la plante est inférieure à une valeur définie, par exemple lorsque cette température est inférieure à 0°C.

Les moyens de régulation (7) peuvent également comprendre une minuterie qui actionne l'alimentation électrique (4) des moyens de chauffage (3) pendant une période définie, par exemple de 20h à 6h.

On notera que l'emplacement de la sonde de température doit être choisi de manière à être proche de la plante tout en étant le plus éloigné possible des moyens de chauffage (3).

Selon un mode de réalisation alternatif de l'invention, les moyens de régulation (7) peuvent comprendre un moyen de réglage de leurs paramètres de déclenchement, par exemple au moyen d'un panneau de commande intégré ou amovible. Ainsi, il est par exemple possible pour l'utilisateur de choisir une plage horaire pendant laquelle les moyens de chauffage (3) sont actionnés et/ou il lui est possible d'indiquer à partir de quelle température minimale ces moyens sont alimentés.

Avantageusement, les moyens de régulation (7) peuvent être programmables afin que leurs paramètres de déclenchement puissent s'ajuster d'eux-mêmes au cours de la période d'hivernage en fonction de paramètre définis par l'utilisateur.

Les moyens de régulation (7) peuvent également comporter des paramètres de déclenchements préprogrammés de sorte que l'utilisateur puisse les paramétrer de la manière la plus simple, la plus intuitive et la plus rapide possible, par exemple en fonction de la région où il se trouve, du type de plante à protéger et de la date du calendrier.

Les moyens de régulation (7) peuvent également être "connectés", par bluetooth ou wifi par exemple, à un objet intelligent (type smartphone ou tablette par exemple) pour pouvoir régler les paramètres souhaités ou être informés de l'état ou des actions des différents composants.

Bien entendu, dans le cas où la plante nécessite un chauffage pendant la période d'ensoleillement, tout ou partie du courant électrique généré par les moyens photovoltaïques (6) peut être utilisée par les moyens de chauffage (3), au détriment de la recharge de la batterie (5).

Les moyens de régulation (7) peuvent être situés n'importe où sur le support textile (2). Tout comme la batterie (5), ils peuvent par exemple être situés en partie basse du voile d'hivernage (1).

De manière générale, les différents moyens de l'invention peuvent être fixés sur le support textile (2) par tout moyen adapté. A titre d'exemple, ils peuvent être collés, cousus, fixés par un adhésif ou par des bandes auto-agrippantes, fixés par des oeillets ou des rivets, logés dans une poche rapportée ou d'une seule pièce avec le support textile (2). Dans le cas d'utilisation de fibres photovoltaïques et/ou chauffantes, la fixation est simplifiée.

On notera également que les moyens sensibles à l'humidité, par exemple tels que la batterie (5) et les moyens de régulation (7) peuvent être protégés de l'humidité par une poche étanche solidarisée ou non au support textile (2).

Il est évident que la présente description ne se limite pas aux exemples explicitement décrits, mais comprend également d'autres modes de réalisation et/ou de mise en oeuvre. Ainsi, une caractéristique technique décrite peut être remplacée par une caractéristique technique équivalente sans sortir du cadre de la présente invention et une étape décrite de mise en oeuvre du procédé peut être remplacée par une étape équivalente sans sortir du cadre de l'invention.

Par exemple, bien que sur la figure les différents moyens soient schématiquement représentés sous la forme de blocs sur le support textile (2), il est évident pour l'homme du métier que ceux-ci, notamment les moyens de chauffage (3) et les moyens photovoltaïques (6), peuvent être dissociés et répartis sur la surface du support textile (2). Ainsi, les moyens de chauffage (3) et les moyens photovoltaïques (6) peuvent être mêlés les uns à côté des autres et répartis sur tout ou partie de la surface du support textile (2).

Ce type de voile d'hivernage (1) peut également être adapté à la protection de plantes plus importantes, comme par exemple des vignes ou des arbres fruitiers, en étant déployé autour des arbres ou au-dessus des champs/vergers/vignes.

Ce type de voile d'hivernage (1) peut également être utilisé pour remplacer les bâches traditionnelles de serre.

Pour faciliter le déploiement du voile d'hivernage (1), plusieurs structures mécaniques sont envisageables, comme par exemple l'intégration d'un ou de plusieurs tuteurs solidaires du voile. On peut également envisager des conceptions plus évoluées et faciles à mettre en place, comme par exemple un voile d'hivernage (1) intégrant un mécanisme de déploiement similaire à celui des abat-jours papier ou des lanternes chinoises.

## Revendications

1. Voile d'hivernage (1) chauffant prévu pour envelopper une plante lors des périodes froides et comprenant :
- un support textile (2) souple et isolant thermique qui laisse passer la lumière ;
- des moyens de chauffage (3) de nature ohmique fixé au support textile (2) ;
et **caractérisé en ce qu'**il comprend en outre :
- une alimentation électrique (4) autonome prévue pour alimenter les moyens de chauffage (3) en courant électrique et comprenant une batterie (5) et des moyens photovoltaïques (6) prévus pour recharger la batterie (5) à partir du rayonnement lumineux ;
- des moyens de régulation (7) prévus pour commander l'alimentation électrique (4) de sorte que les moyens de chauffage (3) soient alimentés en électricité uniquement lors de conditions de température et/ou de durée de chauffage prédéterminées.

2. Voile d'hivernage (1) selon l'une quelconque des revendications précédentes, **caractérisé en ce que** le support textile (2) est partiellement perméable à l'air et au moins partiellement perméable à l'eau.

3. Voile d'hivernage (1) selon la revendication 1, **caractérisé en ce que** le support textile (2) comprend deux couches textiles (8) emprisonnant les moyens de chauffage (3), l'alimentation électrique (4) et les moyens de régulation (7).

4. Voile d'hivernage (1) selon l'une quelconque des revendications précédentes, **caractérisé en ce que** les moyens de chauffage (3) de nature ohmique comprennent au moins l'un des moyens de chauffage (3) suivants :
- un cordon chauffant rapporté sur le support textile (2) du côté de la plante ;
- un cordon chauffant intégré dans l'épaisseur du support textile (2) ;
- un fil résistif chauffant rapporté sur le support textile (2) du côté destiné à venir en regard de la plante ;
- un fil résistif chauffant intégré dans la trame du support textile (2).

5. Voile d'hivernage (1) selon l'une quelconque des revendications précédentes, **caractérisé en ce que** les moyens photovoltaïques (6) sont intégrés dans l'épaisseur du support textile (2) ou sont rapportés sur celui-ci.

6. Voile d'hivernage (1) selon l'une quelconque des revendications précédentes, **caractérisé en ce que** les moyens photovoltaïques (6) comprennent au moins l'un des moyens photovoltaïques (6) suivants :
- des cellules photovoltaïques sur couche mince ;
- des cellules photovoltaïques organiques encapsulées dont le support laisse passer la lumière ;
- des fils ayant des propriétés photovoltaïques, rapportés sur le support textile (2) ou intégrés dans la trame de celui-ci.

7. Voile d'hivernage (1) selon l'une quelconque des revendications précédentes, **caractérisé en ce que** les moyens photovoltaïques (6) sont majoritairement situés sur le support textile (2) de manière à se retrouver, en utilisation, du côté extérieur orienté vers le rayonnement lumineux.

8. Voile d'hivernage (1) selon l'une quelconque des revendications précédentes, **caractérisé en ce que** les moyens de chauffage (3) sont majoritairement situés sur le support textile (2) de manière à se retrouver, en utilisation, du côté destiné à venir en regard de la plante.

9. Voile d'hivernage (1) selon l'une quelconque des revendications précédentes, **caractérisé en ce que** les moyens de régulation (7) comprennent une minuterie qui actionne l'alimentation électrique (4) des moyens de chauffage (3) pendant une période définie.

10. Voile d'hivernage (1) selon l'une quelconque des revendications précédentes, **caractérisé en ce que** les moyens de régulation (7) comprennent un thermostat qui actionne l'alimentation électrique (4) des moyens de chauffage (3) lorsque la température ambiante au niveau de la plante est inférieure à une valeur définie.

11. Voile d'hivernage (1) selon l'une quelconque des revendications précédentes, **caractérisé en ce que** les moyens de régulation (7) comprennent un moyen de réglage de leurs paramètres de déclenchement.

12. Voile d'hivernage (1) selon l'une quelconque des revendications précédentes, **caractérisé en ce qu'**il comporte en outre des structures mécaniques prévues de manière à faciliter sa mise en oeuvre.

13. Voile d'hivernage (1) selon l'une quelconque des revendications précédentes, **caractérisé en ce que** tout ou partie des fils et/ou fibres du support textile sont photovoltaïques et résistants.
